# EUROPEAN PATENT APPLICATION

(11) **EP 2 008 914 A2**
(43) Date of publication of application: **31.12.2008**
(21) Application number: 08158828.7
(22) Date of filing: 24.06.2008
(51) Int. Cl.: B62D 7/18

(54) **Bearing assembly for kingpin or other shaft assembly**

(30) Priority: 26.06.2007 US 937405 P
(71) Applicant: Roller Bearing Company of America, Inc., Oxford, CT 06478 (US)
(72) Inventor: Voisine, James, Bristol, Connecticut 06010 (US)
(74) Representative: Wihlsson, Joakim Per Magnus

(57) **Abstract**

A spherical plain bearing (22) has an outer ring having a concave bearing surface, and an inner ring (10) having a convex bearing surface (12) and a shaft-engaging surface (14). The inner ring (10) is disposed within the outer ring with the concave surface engaging the convex surface (12). The inner ring (10) has a lubrication groove (16) on the convex surface (12) and a lubrication aperture (20) that extends from the groove (16) to the shaft-engaging surface (14). A shaft (40) is mounted in the inner ring (10). The shaft (40) has a lubrication aperture (46) that communicates with the inner ring lubrication aperture (20). Lubricant can be injected into the shaft lubrication aperture (46) to flow lubricant into the bearing load zone via the inner ring lubrication aperture (20). In another aspect, a kingpin linkage assembly includes an axle yoke, a steering knuckle, two king pins pivotally interconnecting the axle yoke and the steering knuckle, and two bearings as described herein for engaging the kingpins.

## Description

### BACKGROUND

Single acting/angular contact spherical plain bearings are designed to support heavy unidirectional thrust and combination radial/thrust loads. Typically, such bearings comprise an inner ring and an outer ring, and the outer ring forms a concave spherical bearing surface that has a large bore opening and a small bore opening. The inner ring has a convex spherical bearing surface sized and configured to engage the outer ring bearing surface. The inner ring may have an interior shaft-engaging surface to engage a rotating and/or pivoting shaft therein.

The outer ring bearing surface is symmetric about a central axis and increases in diameter from the small bore opening to the large bore opening. Accordingly, the inner ring is typically separable from the outer ring by removal via the large bore opening unless it is secured in the outer ring by an accessory structure.

The outer ring typically has a lubrication groove in the concave interior bearing surface and a lubrication aperture that extends through the outer ring, from the exterior surface of the outer ring to the lubrication groove. Typically, the outer ring of the bearing is secured in a housing, and there is a housing lubrication aperture that communicates with the outer ring lubrication aperture. Lubricant can be injected into the bearing load zone (the interface of the bearing surfaces of the inner and outer rings) via the housing lubrication aperture and the outer ring lubrication aperture. In addition, there may be an axial lubrication groove (a "break-out" groove) in the concave bearing surface of the outer ring. The break-out groove communicates with the small bore opening of the outer ring. Lubricant may then be added to the load zone by injecting lubricant into to the small bore opening of the outer ring. The bearing may have a plate at the small bore opening to seal the opening and contain the lubricant provided via the outer ring lubrication aperture or via the shaft. A shaft in the bearing may be equipped with a lubrication aperture through which lubricant is supplied to the small bore opening. Using this configuration, the lubricant would flow through the shaft and deflect back into the bearing via the break-out groove. However, these methods of providing lubricant are sometimes ineffective due to the long and/or convoluted path of travel that the lubricant must traverse to reach the lubrication channel.

Based on the foregoing, it is the general object of this invention to provide a bearing and a method of lubrication that improves upon, or overcomes the problems and drawbacks of prior art bearings.

### SUMMARY OF THE INVENTION

The present invention resides in one aspect in a shaft and bearing assembly that includes a shaft mounted in a spherical plain bearing. The spherical plain bearing includes an outer ring and an inner ring disposed within the outer ring. The inner ring has a first bearing surface and an interior shaft-engaging surface, the first bearing surface having a convex spherical configuration. The inner ring is mounted on the shaft. The outer ring has a second bearing surface that engages the first bearing surface. There is a first inner ring lubrication groove on the first bearing surface of the inner ring, as well as an inner ring lubrication aperture that extends from the first inner ring lubrication groove to the shaft-engaging surface. The shaft comprises a shaft lubrication aperture that communicates with the inner ring lubrication aperture.

The present invention resides in another aspect in a kingpin linkage assembly that includes a steering knuckle and an axle yoke pivotably interconnected with the steering knuckle by two kingpin-bearing assemblies. The kingpin-bearing assembly includes a kingpin and an associated spherical plain bearing. Each spherical plain bearing comprising an outer ring and an inner ring disposed within the outer ring, with the kingpin being mounted in the inner ring. The inner ring has a first bearing surface and an interior shaft-engaging surface, and the outer ring has a second bearing surface. The first bearing surface has a convex spherical configuration and the second bearing surface has a concave spherical configuration. The second bearing surface slidability engages the first bearing surface. There is a first inner ring lubrication groove on the first bearing surface and an inner ring lubrication aperture that extends from the first inner ring lubrication groove to the shaft-engaging surface. The kingpin includes a kingpin lubrication aperture that communicates with the inner ring lubrication aperture.

Another aspect of the invention resides in a method of lubricating a bearing and shaft assembly as described herein. The method includes flowing lubricant through the shaft lubrication aperture, through the inner ring lubrication aperture, and into the first lubrication groove.

### BRIEF DESCRIPTION OF THE DRAWINGS

Fig. 1 is a perspective view of an inner ring for a single acting spherical plain bearing as described herein;

Fig. 2 is a schematic cross-sectional view of one embodiment of a spherical plain bearing according to the present invention;

Fig. 3 is a schematic cross-sectional view of the bearing of Fig 2. with a shaft mounted therein;

Fig. 4 is a schematic cross-sectional view of a kingpin linkage assembly comprising the bearing of Fig. 2.

### DETAILED DESCRIPTION

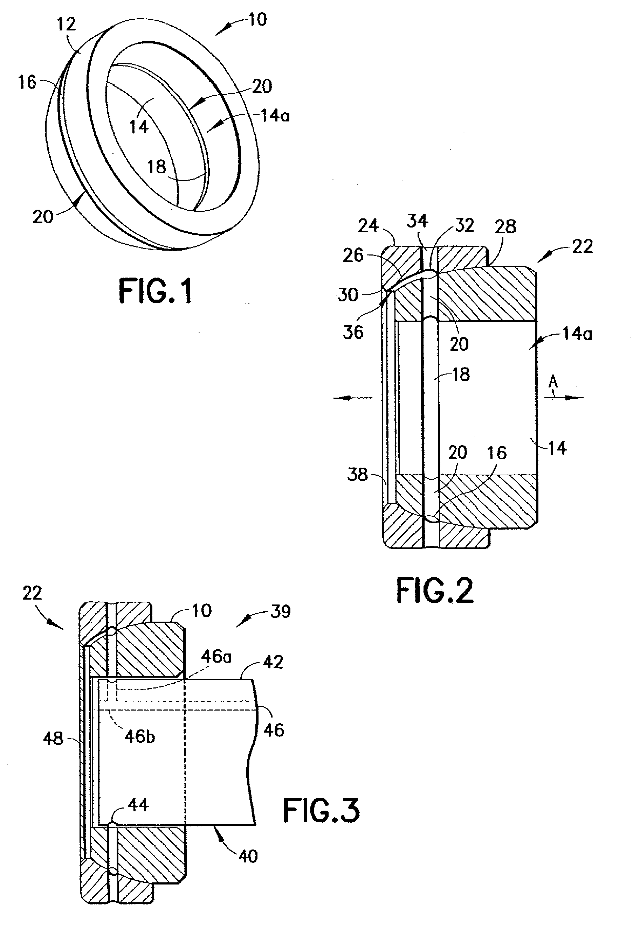

One illustrative embodiment of an inner ring for a single-acting spherical plain bearing according to this invention is shown in Fig. 1. Inner ring 10 has a first bearing surface 12 that has a convex, spherical configuration. The inner ring 10 also has an interior cylindrical shaft-engaging surface 14 that defines an inner ring bore 14a. Inner ring 10 also has an inner ring lubrication groove 16 on the first bearing surface 12 and an optional interior lubrication groove 18 on the shaft-engaging surface 14.

The inner ring 10 is shown as having one inner ring lubrication groove 16, one interior lubrication groove 18 and two inner ring lubrication apertures 20, but the invention is not limited in this regard, as in alternative embodiments there may only be one inner ring lubrication aperture or there may be more than two such apertures. There may also be more than one inner ring lubrication groove 16 and/or more than one interior lubrication groove.

A spherical plain bearing comprising the inner ring 10 of Fig. 1 is shown in Fig. 2. The bearing 22 comprises the inner ring 10 and an outer ring 24. The outer ring 24 has a second bearing surface 26 that has a concave spherical configuration and is configured to have a large bore opening 28 on one side and a small bore opening 30 on the other side. The second bearing surface 26 is internal to the outer ring 24 and has a spherical configuration that is dimensioned to engage the first bearing surface 12 of the inner ring 10, which is disposed therein. The interface of the second bearing surface 26 and the first bearing surface 12 is the load zone of the bearing 22. The inner ring 10 and the outer ring 24 are both symmetric about respective central axes. When the inner ring 10 and the outer ring 24 are arranged as in Fig. 2, their respective central axes coincide at A. Outer ring 24 has a outer ring lubrication groove 32 on the second bearing surface 26 and a lubrication outer ring lubrication aperture 34 that extends through the outer ring 24 and communicates with (e.g., opens to) the outer ring lubrication groove. An axially-oriented break-out lubrication groove 36 in the second bearing surface 26 that provides a flow path for lubrication to travel from the groove 32 to the small bore opening 30, thus providing lubricant communication between groove 32 and small bore opening 30. Outer ring 24 has an annular seat 38 at the small bore opening 30 where a sealing plate can be mounted to inhibit the loss of lubricant from the load zone through the small bore opening 30, and to inhibit the entry of contaminants into the bearing via the small bore opening.

The outer ring 24 is shown as having one outer ring lubrication groove 32, one outer ring lubrication aperture and one optional break-out lubrication groove, but the invention is not limited in this regard, as in alternative embodiments there may only be more than one outer ring lubrication groove, and/or more than one outer ring lubrication aperture, and/or, optionally, more than one optional break-out lubrication groove.

In still other embodiments, there may be a break-out lubrication groove on the convex bearing surface of the inner ring.

The bearing 22 provides a direct path for providing lubricant to the bearing load zone. This is accomplished by use of aperture 20 in the inner ring 10. Lubricant can be introduced into the bearing spherical raceway or load zone through a shaft mounted in inner ring 10, as described elsewhere herein.

One embodiment of the bearing 22 combined with a shaft 40 mounted therein is shown in Fig. 3 as a shaft and bearing assembly 39. The shaft 40 has an exterior mounting surface 42 that engages the shaft-engaging surface 14 (Fig. 1) of the inner ring 10. To provide lubricant to the bearing, the shaft 40 has a shaft lubrication aperture 46 extending therethrough that includes a radial outlet 46a. Optionally, the shaft 40 has on its surface 42 a circumferential lubrication groove 44 and, optionally, the radial outlet 46a opens to the circumferential lubrication groove. One or both of the radial outlet 46a and the lubrication groove 44 are aligned with the inner ring lubrication features, i.e., with aperture 20 and/or the inner ring lubrication groove 16, if the inner ring lubrication groove is present. This alignment allows the lubricant to flow through the shaft, through the inner ring lubrication aperture 20 and to one or more lubrication grooves, i.e., circumferential lubrication groove 44, inner ring lubrication groove 16 and/or the lubrication groove 32, to lubricate the load zone. A secondary lubricant flow path is provided via an axial lubrication outlet 46b. An optional seal plate 48 may be disposed in seat 38 (Fig. 2) to close small bore opening 30, and lubricant may be flowed through the lubrication aperture 46 and axial lubrication outlet 46b to the small bore opening 30 (Fig. 2), whereby to supply lubricant to the load zone via the break-out groove 36. While the shaft 40 is shown with both a radial lubrication outlet 46a and an axial lubrication outlet 46b, the invention is not limited in this regard, and in other embodiments, a shaft may have only a radial lubrication outlet, only an axial lubrication outlet, or more than two lubrication outlets.

The load zone of the bearing 22 can be lubricated by injecting lubricant through an inner ring lubrication aperture 20, via the shaft lubrication aperture 46. Lubricant will flow through the shaft 40 and will enter the bearing via one or both of a radial lubrication outlet 46a and an axial lubrication outlet 46b. The lubricant will flow through the inner ring lubrication aperture 20 (optionally by way of the inner ring inner lubrication groove 18) to the load zone where it will be distributed via the inner ring lubrication groove 16 and/or the outer ring lubrication groove 32. This is an effective and efficient means of bearing lubrication and it also provides a secondary lubricant flow path when used in conjunction with prior art lubrication methods such as supplying lubrication to the outer ring small bore via the break-out lubrication groove.

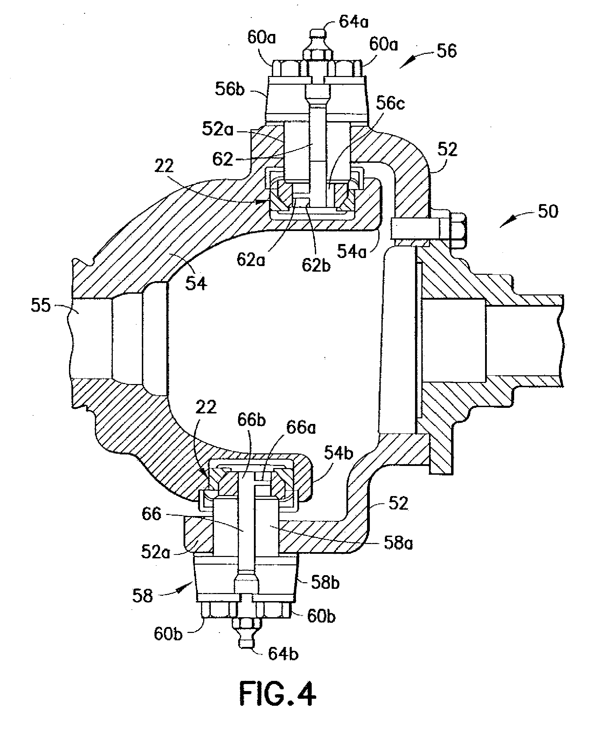

In a specific embodiment of a shaft and bearing assembly 39, the shaft may be a kingpin 56 or 58 (Fig. 4), to provide a kingpin-and bearing assembly (unnumbered), and there may be two kingpin-and bearing assemblies in a kingpin linkage assembly 50 for a wheeled vehicle. The kingpin linkage assembly 50 comprises a steering knuckle 52 that is pivotably interconnected to an axle yoke 54 by the two kingpin-and bearing assemblies 39a, 39b. The steering knuckle 52 is connected to a wheel hub (not shown), while the axle yoke 54 is connected to an axle 55.

The bearings 22 are mounted in respective mounting portions 54a, 54b of the axle yoke 54 and the outer rings 24 may be fixedly secured to the axle yoke. Each kingpin 56, 58 has a respective journal portion 56a, 58a that passes through a respective kingpin aperture 52a in the steering knuckle 52 and engages the bore 14a of the inner ring 10 of the associated bearing 22. In the illustrated embodiment, the journal portions 56a, 58a include reduced diameter end portions that fit into the inner rings 10 of the respective bearings 22. However, the invention is not limited in this regard, and in the exercise of ordinary skill in the art, various sizes and configurations of journal portions on the kingpins can be matched with bearings. Each kingpin 56, 58 comprises a mounting portion 56b, 58b by which the kingpin is fixedly secured to the steering knuckle 52. For example, each kingpin 56, 58 may have a respective head portion 56b, 58b that may be attached to the steering knuckle 52 by one or more bolts 60a, 60b that extend through the head portions to the steering knuckle. However, the invention is not limited in this regard as numerous other mounting configurations will occur to one of ordinary skill in the art, e.g., the kingpins 56 and/or 58 may have fitted portions 56c, 58c that are keyed in respective apertures in the steering knuckle 52. The kingpins 56, 58 may be equipped with lubrication apertures 62, 66 and lube fittings 64a, 64b to lubricate their respective bearings as described in relation to Fig. 3. Kingpin 56 includes a radial lubrication outlet 62a and an axial lubrication outlet 62b. Optionally, one or both of the kingpins 56, 58 may have a circumferential lubrication groove to which the radial lubrication outlet 62a opens. In the illustrated embodiment, both kingpins 56 and 58 have a radial lubrication outlet 62a, 66a and an axial lubrication outlet 62b, 66b, but the invention is not limited in this regard as the kingpins 56, 58 need not have the same outlet configuration, and either or both of the kingpins 56, 58 may have either a radial lubrication outlet 56a, 66a or an axial lubrication outlet 56b, 66b.

To assemble the kingpin linkage assembly 50, the outer rings 24 are installed in the axle yoke 54 and the inner rings 10 are pressed onto the kingpins 56, 58. The steering knuckle 52 is aligned with the axle yoke 54 and the kingpins (with inner rings 10 mounted thereon) are then inserted through the apertures 52a in the steering knuckle and into the axle yoke where the inner rings then mate with the outer rings 24. The assembly process is completed by bolting the kingpins 56, 58 to the steering knuckle 52 with bolts 60a, 60b.

In use, a driver rotates a steering wheel (not shown) that is connected to the steering knuckle 52 via tie rods (not shown). The kingpin linkage assembly allows the steering knuckle 52 and a wheel hub thereon to pivot relative to the axle yoke 54 and axle 55. Thus, the driver turns the vehicle wheels.

While Fig. 4 shows kingpin-bearing assemblies pivotably interconnecting an axle yoke and a steering knuckle wherein the kingpin is fixedly mounted in the steering knuckle and the bearing is mounted in the axle yoke, this is not a limitation on the invention, and one of ordinary skill in the art to which this invention relates will appreciate that in alternative embodiments, the kingpins may be mounted on the axle yoke, while the bearings may be mounted in the steering knuckle.

The terms "first," "second," and the like, herein do not denote any order, quantity, or importance, but rather are used to distinguish one element from another. In addition, the terms "a'' and "an" herein do not denote a limitation of quantity, but rather denote the presence of at least one of the referenced item.

Although the invention has been described with reference to particular embodiments thereof, it will be understood by one of ordinary skill in the art, upon a reading and understanding of the foregoing disclosure, that numerous variations and alterations to the disclosed embodiments will fall within the scope of this invention and of the appended claims.

## Claims

1. A shaft and bearing assembly comprising:
a spherical plain bearing comprising an outer ring;
an inner ring disposed within the outer ring; the inner ring having a first bearing surface and an interior shaft-engaging surface, the first bearing surface having a convex spherical configuration; and
a shaft mounted in the inner ring;
wherein the outer ring comprises a second bearing surface, the second bearing surface having a concave spherical configuration and being engageable with the first bearing surface;
wherein the inner ring comprises a first inner ring lubrication groove on the first bearing surface and an inner ring lubrication aperture that extends from the first inner ring lubrication groove to the shaft-engaging surface; and
wherein the shaft comprises a shaft lubrication aperture that communicates with the inner ring lubrication aperture.

2. The assembly of claim 1 wherein the shaft lubrication aperture comprises a radial lubrication outlet.

3. The assembly of claim 1 wherein the shaft lubrication aperture comprises an axial lubrication outlet, and wherein the bearing comprises a breakout groove in the load zone.

4. The assembly of claim 1 wherein the outer ring has a bore opening and a sealing plate that closes the bore opening, and wherein the outer ring further includes an outer ring lubrication groove on the second bearing surface and an axially-oriented break-out lubrication groove in the second bearing surface to provide a flow path for lubrication between the outer ring lubrication groove and the small bore opening.

5. The assembly of claim 4, wherein the shaft lubrication aperture includes an axial lubrication outlet that opens to the small bore opening.

6. The assembly of claim 1 wherein the shaft comprises a circumferential lubrication groove on the shaft bearing surface, and wherein the inner ring lubrication aperture is open to the circumferential lubrication groove.

7. The assembly of claim 1, wherein the bearing is a single acting bearing.

8. A kingpin linkage assembly comprising:
a steering knuckle; and
an axle yoke pivotably interconnected with the steering knuckle by a kingpin-bearing assembly;
said kingpin-bearing assembly comprising a kingpin and an associated spherical plain bearing, each spherical plain bearing comprising an outer ring, an inner ring disposed within the outer ring, the kingpin being mounted in the inner ring;
wherein the inner ring comprises a first bearing surface and an interior shaft-engaging surface, the first bearing surface having a convex spherical configuration;
wherein the outer ring comprises a second bearing surface dimensioned to engage the first bearing surface;
wherein the inner ring comprises a first inner ring lubrication groove on the first bearing surface and an inner ring lubrication aperture that extends from the first inner ring lubrication groove to the shaft-engaging surface; and
wherein the kingpin comprises a kingpin lubrication aperture that communicates with the inner ring lubrication aperture.

9. The assembly of claim 8 wherein the kingpin comprises a circumferential lubrication groove, and wherein the inner ring lubrication aperture is open to the circumferential lubrication groove.

10. The assembly of claim 8, wherein the bearing is a single acting bearing.

11. The assembly of claim 8, wherein each associated spherical plain bearing is a single-acting bearing and each king pin has a journal portion that is mounted in the inner ring of the associated bearing.

12. The kingpin linkage assembly of claim 11, wherein the outer ring of each bearing is mounted in the axle yoke.

13. The kingpin linkage assembly of claim 11, wherein the outer ring of each bearing is mounted in the steering knuckle.

14. The kingpin linkage assembly of claim 11 wherein each kingpin comprises a kingpin lubrication aperture that opens to the inner ring lubrication aperture.

15. A method of lubricating a bearing and shaft assembly as defined in claim 1, the method comprising flowing lubricant through the shaft lubrication aperture, through the inner ring lubrication aperture, and into the first lubrication groove.

16. The method of claim 15, wherein the bearing comprises a bearing load zone where the first bearing surface engages the second bearing surface, and wherein the outer ring comprises a small bore opening, and wherein there is a break-out groove in the bearing load zone that enables the flow of lubricant between the first lubrication groove and the small bore opening, and wherein the shaft include a shaft lubrication aperture that opens to the small bore opening, and wherein the method comprises flowing lubricant through the shaft lubrication aperture to the small bore opening and then to the load zone.

17. A method of lubricating a kingpin linkage assembly as defined in claim 8, the method comprising flowing lubricant through the kingpin lubrication aperture, through the inner ring lubrication aperture, and into the first lubrication groove.

18. The method of claim 17, wherein each bearing comprises a bearing load zone where the first bearing surface engages the second bearing surface, and wherein the outer ring comprises a small bore opening, and wherein there is a break-out groove in the bearing load zone that enables the flow of lubricant between the first lubrication groove and the small bore opening, and wherein the shaft include a shaft lubrication aperture that opens to the small bore opening, and wherein the method comprises flowing lubricant through the shaft lubrication aperture to the small bore opening and then to the load zone.
